# EUROPÄISCHE PATENTANMELDUNG

(11) **EP 0 922 483 A1**
(43) Veröffentlichungstag der Anmeldung: **16.06.1999**
(21) Anmeldenummer: 98121829.0
(22) Anmeldetag: 17.11.1998
(51) Int. Cl.: B01D 53/26

(54) **Verfahren und Vorrichtung zum Entfeuchten von Abluft**

(30) Priorität: 09.12.1997 DE 19754405
(71) Anmelder: Langner, Manfred H., 60318 Frankfurt am Main (DE)
(72) Erfinder: Langner, Manfred H., 60318 Frankfurt am Main (DE)
(74) Vertreter: Katscher, Helmut, Dipl.-Ing.

(57) **Zusammenfassung**

Zum Entfeuchten wird Abluft nacheinander einem ersten Kühlvorgang durch Wärmetausch und einem zweiten Kühlvorgang durch Wärmetausch unterworfen. Der Wärmetausch im zweiten Kühlvorgang erfolgt mit einem von außen zugeführten Kühlmedium. Der Wärmetausch im ersten Kühlvorgang erfolgt mit der von dem zweiten Kühlvorgang zurückgeführten Abluft. Die warme, beispielsweise geruchsbelastete Abluft wird durch die beiden Kühlvorgänge entlang der Taupunktlinie entfeuchtet und anschließend ohne Fremdheizung wieder erwärmt, so daß sie einer nachfolgenden weitergehenden Luftbehandlung unterworfen werden kann.

## Beschreibung

Die Erfindung betrifft ein verfahren zum Entfeuchten von Abluft mittels Kühlung.

Bei der Luftbehandlung von feuchter Abluft bereitet ein hoher Feuchtigkeitsgehalt Schwierigkeiten, weil die in der weitgehend oder vollständig gesättigten Abluft enthaltene Feuchtigkeit kondensiert und beispielsweise die bei einer Luftbehandlung eingesetzte Aktivkohle benetzt, bzw. sättigt.

Es ist bekannt, durch Kühlung eine Entfeuchtung von Luft vorzunehmen. Für den Kühlvorgang ist ein Energieaufwand erforderlich. Die so gekühlte Luft muß jedoch auf eine für die weitere Luftbehandlung erforderliche Temperatur erwärmt werden, wofür wiederum ein Energieaufwand erforderlich ist.

Aufgabe der Erfindung ist es, ein verfahren der eingangs genannten Gattung so auszugestalten, daß die Abluft mit möglichst geringem Energieaufwand in einen für die weitere Luftbehandlung günstigen Zustand gebracht wird.

Diese Aufgabe wird erfindungsgemäß dadurch gelöst, daß die Abluft nacheinander einem ersten Kühlvorgang durch Wärme-tausch und einem zweiten Kühlvorgang durch Wärmetausch unterworfen wird, wobei der Wärmetausch im zweiten Kühlvorgang mit einem von außen zugeführten Kühlmedium und der Wärmetausch im ersten Kühlvorgang mit der von dem zweiten Kühlvorgang zurückgeführten Abluft erfolgt.

Die ursprünglich feuchte, z.B. geruchsbeladene Abluft, die in diesem Zustand nicht geruchsmindernd behandelt werden kann, weil die Feuchtigkeit die zur Anwendung kommende Aktivkohle benetzt bzw. sättigt, wird durch die beiden aufeinanderfolgenden Wärmetauschvorgänge in einen Zustand geringerer relativer Luftfeuchte zurückgeführt, so daß anschließend weitergehende Luftbehandlungen möglich sind. Diese Entfeuchtung und Rückführung in den relativen Feuchtebereich erfolgt ohne Fremdheizung. Auch die Kühlung kann ohne Fremdenergie ausgeführt werden, wenn gemäß einer vorteilhaften Ausgestaltung des Erfindungsgedankens als das im zweiten Kühlvorgang zugeführte Kühlmedium Umgebungsluft gewählt wird.

Vorzugsweise erfolgt der Wärmetausch im ersten Kühlvorgang und/oder im zweiten Kühlvorgang im Kreuzstrom.

Eine vorteilhafte Weiterentwicklung des Erfindungsgedankens besteht in der Verwendung des erfindungsgemäßen Verfahrens zur Vorbehandlung von mit Geruchsstoffen beladene Abluft, die nachfolgend einer Luftbehandlung, vorzugsweise einem Adsorptionsvorgang unterworfen wird.

Die Erfindung betrifft auch eine Vorrichtung zur Durchführung des Verfahrens mit einem von einem Kühlmedium durchströmten Kühlwärmetauscher. Erfindungsgemäß ist vorgesehen, daß dem Kühlwärmetauscher ein erster Wärmetauscher vorgeschaltet ist, der von der den Kühlwärmetauscher verlassenden Abluft durchströmt wird.

Vorzugsweise sind der Kühlwärmetauscher und/oder der erste Wärmetauscher in Kreuzstrombauweise ausgeführt.

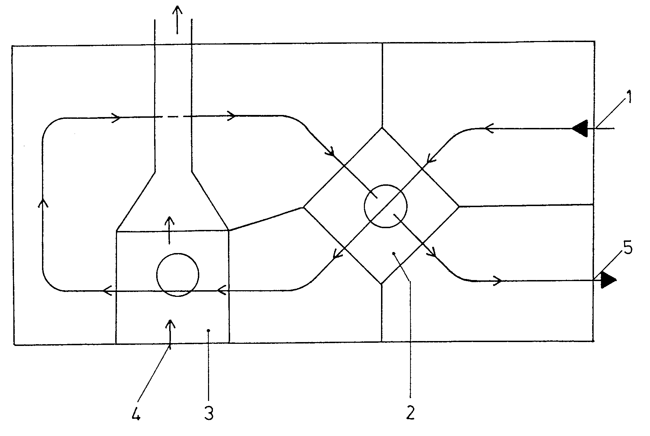

Nachfolgend wird ein Ausführungsbeispiel der Erfindung näher erläutert, das in der Zeichnung dargestellt ist.

Die Zeichnung zeigt in schematischer Darstellungsweise eine Vorrichtung zum Entfeuchten von Abluft. Die an einem Ablufteinlaß 1 zugeführte warme, feuchte Prozeßabluft oder Raumluft durchströmt zuerst einen ersten Wärmetauscher 2, der vorzugsweise ein in Kreuzstrombauweise ausgeführter Plattenwärmetauscher ist. Die beispielsweise mit einer Temperatur von 55°C zugeführte Abluft wird im ersten Wärmetauscher 2 auf 35°C abgekühlt.

Die so abgekühlte Abluft gelangt in einen Kühlwärmetauscher 3, der ebenfalls vorzugsweise in Kreuzstrombauweise ausgeführt ist. Ein an einem Kühleinlaß 4 eintretendes Kühlmedium, beispielsweise Umgebungsluft mit 5°C strömt im Kreuzstrom zu der Abluft durch den Kühlwärmetauscher 3 und kühlt die Abluft dabei auf 10°C ab.

Die abgekühlte Abluft passiert anschließend wieder den ersten Wärmetauscher 2 im Kreuzstrom und erwärmt sich dabei durch die zugeführte Abluft auf 30°C, bevor sie an einem Abluftauslaß 5 austritt und einer (nicht dargestellten) Luftbehandlungseinrichtung zugeführt wird.

Die Abluft wird beim Durchgang durch den ersten Wärmetauscher 2 und den Kühlwärmetauscher 3 entlang der Taupunktlinie bis auf 10°C entfeuchtet. Beim nochmaligen Durchgang durch den ersten Wärmetauscher 2 wird die zunächst dort abgegebene Wärme wieder aufgenommen, so daß warme Luft mit einer Temperatur von etwa 30°C zur Verfügung steht, die im relativen Feuchtebereich liegt.

Während die Abluft ursprünglich einen so hohen Feuchtegehalt hat, daß sie nicht geruchsmindernd behandelt werden kann, weil die Feuchtigkeit die zur Anwendung kommende Aktivkohle benetzen bzw. sättigen würde, sind durch die beschriebene Rückführung der Abluft in den relativen Feuchtebereich weitergehende Luftbehandlungen, insbesondere zur Geruchsminderung, ohne Schwierigkeiten möglich.

## Patentansprüche

1. Verfahren zum Entfeuchten von Abluft mittels Kühlung, dadurch gekennzeichnet, daß die Abluft nacheinander einem ersten Kühlvorgang durch Wärmetausch und einem zweiten Kühlvorgang durch Wärmetausch unterworfen wird, wobei der Wärmetausch im zweiten Kühlvorgang mit einem von außen zugeführten Kühlmedium und der Wärmetausch im ersten Kühlvorgang mit der von dem zweiten Kühlvorgang zurückgeführten Abluft erfolgt.

2. Verfahren nach Anspruch 1, dadurch gekennzeichnet, daß das im zweiten Kühlvorgang zugeführte Kühlmedium Umgebungsluft ist.

3. Verfahren nach Anspruch 1, dadurch gekennzeichnet, daß der Wärmetausch im ersten Kühlvorgang und/im zweiten Kühlvorgang in Kreuzstrom erfolgt.

4. Verwendung des Verfahrens nach einem der Ansprüche 1-3 zur Vorbehandlung von Geruchsstoffen beladener Abluft, die nachfolgend einer Luftbehandlung, vorzugsweise einem Adsorptionsvorgang unterworfen wird.

5. Vorrichtung zur Durchführung des Verfahrens nach einem der vorhergehenden Ansprüche mit einem von einem Kühlmedium durchströmten Kühlwärmetauscher, dadurch gekennzeichnet, daß dem Kühlwärmetauscher (3) ein erster Wärmetauscher (2) vorgeschaltet ist, der von der den Kühlwärmetauscher (3) verlassenden Abluft durchströmt wird.

6. Vorrichtung nach Anspruch 5, dadurch gekennzeichnet, daß der Kühlwärmetauscher (3) und/oder der erste Wärmetauscher (2) in Kreuzstrombauweise ausgeführt sind.
